# EUROPEAN PATENT SPECIFICATION

(11) **EP 3 563 934 B1**
(45) Date of publication and mention of the grant of the patent: **25.08.2021**
(21) Application number: 18170036.0
(22) Date of filing: 30.04.2018
(51) Int. Cl.: B03C 11/00, B01D 17/12, C10G 33/02, B01D 17/06

(54) **METHOD FOR CONTROLLING THE POWER SUPPLY TO ELECTRODES OF AN COALESCER**
VERFAHREN ZUR STEUERUNG DER STROMVERSORGUNG VON ELEKTRODEN EINES TROPFENABSCHEIDERS
PROCÉDÉ DE COMMANDE DE L'ALIMENTATION ÉLECTRIQUE AUX ÉLECTRODES D'UN COALESCEUR

(43) Date of publication of application: 06.11.2019
(73) Proprietor: NOV Process & Flow Technologies AS, 1364 Fornebu (NO)
(72) Inventor: HAUGS, Espen, N-1591 SPERREBOTN (NO)
(74) Representative: Onsagers AS

(56) References cited:
- WO-A1-2005/076293
- WO-A1-2010/054074
- WO-A1-2016/062353
- JP-A- S5 947 620
- US-A1- 2011 148 202

## Description

### FIELD OF THE INVENTION

The present invention relates to a method of controlling an AC power supply system supplying an AC output voltage to electrodes of an electrostatic coalescer. The present invention also relates to an AC power supply system for supplying an AC output voltage to electrodes of an electrostatic coalescer.

### BACKGROUND OF THE INVENTION

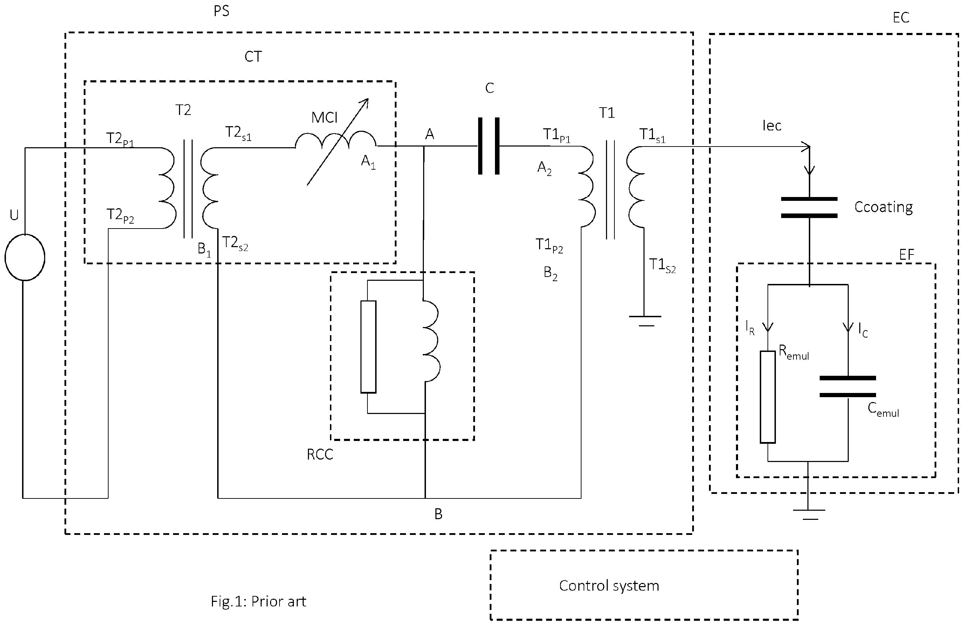

Coalescers are for example used in the oil industry to separate the water component from the oil components of the crude oil. Electrostatic coalescers are using a variating electrostatic field to do this. NO 336293 describes a prior art power supply system for a coalescer, where fig. 1 of the present application shows one of the embodiments from this prior art.

Here, a power supply system is shown within a dashed box PS, connected between a voltage source U and an electric equivalent of a coalescer shown as a dashed box EC. The coalescer EC is shown to comprise an electric equivalent of the fluid denoted as EF, comprising a resistor Remul in parallel with a capacitor Cemul. The present coalescer comprises coated electrodes represented by the capacitor Ccoating. Hence, the entire coalescer can be represented electrically as the capacitor Ccoating connected in series with the parallel connection of the resistor Remul and the capacitor Cemul.

The coated electrodes comprise electrodes made of an electrically conducting material with a surface coating. The coating is typically made of polytetrafluoroethylene also known as Teflon. The purpose of the coating is to prevent or reduce short circuit currents which may otherwise occur between pure metallic electrodes if, for example sea water, is introduced into the coalescer. The purpose of the coating is also to maintain and define the electrostatic field in the emulsion being treated.

The power supply PS comprises a first transformer T1, which is a step-up up transformer supplying a secondary voltage to the electrodes of the coalescer. Due to fluid variations in the coalescer the voltage between these electrodes may vary. Moreover, as the coalescer is a capacitive load, there is also a need to provide the coalescer with reactive power.

Hence, in order to control the voltage supplied to the primary side of the first transformer T1, the power supply PS further comprises a controllable transformer CT and a resonant control circuit RCC for resonance control. The controllable transformer CT comprises a second transformer T2 and a magnetic controllable inductor MCI.

The second transformer T2 is connected with first and second primary terminals T2P1, T2P2 of its primary winding to a power supply source U, such as the mains, a generator etc, typically supplying 400V - 690 V AC. These terminals T2P1, T2P2 also corresponds to the input terminal of the dashed box CT. The output terminals of the dashed box CT are connected to nodes A, B, where the first secondary terminal T2S1 of the second transformers secondary winding is connected to the node A via the magnetic controllable inductor MCI and where the second secondary terminal T2S2 of the second transformers T2 secondary winding is connected to the node B. The typical output voltage of the second transformer T2 is 500 - 900V. The magnetic controllable inductor MCI is described in US 2005190585 and is a device where inductance can be controlled. Hence, the magnetic controllable inductor MCI provides the possibility to control the reactive power supplied to the first transformer T1 and also to control the output voltage level even if the load (the coalescer) is varying.

As discussed above, the capacitance and the resistance of the load is varying and the inductance of the magnetic controllable inductor MCI is also varying. It is therefore necessary to provide the power supply PS with the resonant control circuit RCC to ensure that potentially damaging resonance between the inductance and the capacitance of the entire circuit in fig. 1. The resonant control circuit RCC is connected between the first node A and the second node B and comprises a resistor in parallel with an inductor.

The power supply PS also comprises a control system for controlling the magnetic controllable inductor MCI.

The first transformer T1 has a primary winding with first and second primary terminals T1P1, T1P2 and a secondary winding with first and second secondary terminals T1S1, T1S2. The first and second secondary terminals T1S1, T1S2 are provided for connection to the electrodes of the coalescer EC, or as shown in fig. 1, with terminal T1S1 connected to the electrodes and the terminal T1S2 connected to ground, where the electrodes of the coalescer EC is also connected to ground.

The first primary terminal T1P1 is connected to the node A via a capacitor C. The second primary terminal T2S1 is connected to ground.

The above information is considered known from NO 336293 and WO 2016/062353.

US 2011/148202 describes methods and apparatus for power factor correction include selectively coupling bit reactive loads with a load having dynamic reactive properties to dynamically correct a power factor. JP S59 47620 relates to performing a working test of a function in parallel to a normal automatic control without actuating a switch, by setting a test mode and performing the test during an automatic control process. Thus it is possible to perform a working test of a function in parallel to the normal automatic control without actuating a switch.

US 4226689 describes that short circuit currents caused by high-conductive water paths (due to so-called chaining or water bridging) between electrodes is a problem in a coalescer, which also causes a problem for the transformer of the power supply system of the coalescer. It is described to use an ammeter and a volt meter for measuring the current/voltage supplied to the electrodes and active control of the voltage potential during operation of the coalescer.

US 1754009 describes voltage control of electrodes in a coalescer for separating emulsions of varying-initial conductivity, or of varying conductivity while being treated. The effective potential gradient applied to the emulsion is to be maintained as high as practicable but below the point at which a conducting path (i.e. short-circuit between electrodes) will be formed. With such a solution high efficiency is achieved while power arcs due to high conductive water paths are avoided. The automatic control system comprises relays (switches) connected to the windings of an autotransformer. By changing the state of the relays, the voltage supplied to the coalescer is changed stepwise. These relays are controlled by a sensor which are measuring the conductivity of the fluid between the electrodes. In this publication, the control is performed by using the applied voltage as a function of a target current, where this target current must be below a threshold defined by the worst operational case, i.e. the highest expected water cut.

WO2005/076293A1 discloses a power supply for an electrostatic coalescer.

In situations where high water cuts can be expected, the above control method has a disadvantage, as the voltages between the electrodes are kept lower than necessary for lower water cuts. Consequently, the coalescer is not performing optimal separation of the fluid in the coalescer.

Moreover, having a sensor for sensing the water cut inside the coalescer is not desirable or practical.

Previously known coalescers have some limitations. In practice, many coalescers have a maximum water cut from 20 to 30%. If the water cut exceeds this maximum value, the current will become so high that a fuse of the power supply will blow.

The time response in a relay stepwise controlled system is very slow when the water cut changes, such as when water slugs occur. These changes in load occur within a millisecond and relays operates in hundreds of milliseconds dependant of their design and size.

A stepwise control can be too coarse as this normally is done by changing the primary windings of the HV transformer in steps of normally 5% or higher.

If a rapid current increase occurs due to water slugs, short or long, the primary fuses may blow on the transformer and disrupt the coalescence process.

To prevent the fuses from blowing, a special designed transformer called a full reactance transformer is commonly used, that has a built in a fixed air gap in the iron core to limit the energy during a high water conductive paths short. A full reactance transformer has a limited operational window if the fluid becomes more conductive (higher water cut) and can only operate with full voltage within a limited load range.

The object of the present invention is to provide a power supply system for an AC type of coalescer and to provide a method for controlling a coalescer where short circuits are avoided while at the same time achieving a better separation of the fluids in the coalescer having different water cuts.

Another object of the invention is to obtain information about the water cut in the coalescer, without using a physical sensor inside the coalescer.

Another object of the invention is to provide a coalescer which may be used for higher water cuts, i.e. higher than the above-mentioned threshold (of circa 30%).

Another object of the invention is to be able to control the coalescer to perform coalescence even if the electrodes have smaller defects.

### SUMMARY OF THE INVENTION

Electrostatic coalescing is most efficient when the effective potential gradient applied to an emulsion maintained is as high as practicable but below the point at which a conducting path (i.e. short-circuit between electrodes) forms, which will a be accordantly optimal applied voltage and corresponding current for any given watercut.

A variation in the water cut of the emulsion will change the conductivity and capacity of the emulsion, hence there will be different optimal applied voltage with corresponding currents for various watercuts.

The present invention eliminates the need for knowing the actual watercut level, by controlling the phase difference between the output current and the output voltage to optimal applied voltage and corresponding current. The phase difference would be similar or the same for various watercuts, as when the when the applied voltage is so high that a conducting path starts to occur, the phase difference will also start to shift, indicating a more resistive load. Hence by controlling such a phase difference, such as keeping it within a range, a better separation of the fluids in the coalescer in the whole range of different water cuts of the fluid to be treated is achieved.

Since the output currents could be very low and unregular, and since the voltage is not always an ideal sine curve, it not straight forward to identify the phase difference by looking at measurement outputs. So, it is also realized that it necessary to measure a parameter representative of the output current and the output voltage. Non- limiting examples of parameters representative output current or the output voltage could be the time points of peaks values are measured, or time point where zero values occurs, or any other suitable methods.

The present invention relates to a method of controlling an AC power supply system supplying an AC output voltage to electrodes of an electrostatic coalescer, characterized in that the method is comprising the steps of:
- measuring a parameter representative of an output current of the power supply system;
- measuring a parameter representative of the output voltage of the power supply system;
- identifying a phase difference between the output current and the output voltage;
- controlling the power supply system to keep the phase difference in a predetermined range from a minimum phase difference equal to π/6 radians to a maximum phase difference equal to π/2 radians.

In one aspect, the step of controlling the AC power supply system comprises the step of:
- controlling an inductance of a controllable inductor of the AC power supply system.

Alternatively, the step of controlling the AC power supply system may comprise controlling a thyristor, a frequency converter, a semiconductor based switch etc.

In one aspect, the step of controlling the AC power supply system comprises the steps of:
- controlling the AC power supply system to keep the output current leading the output voltage.

In one aspect, the step of controlling the AC power supply system comprises to keep the phase difference in the range from the minimum phase difference equal to π/4 radians to the maximum phase difference equal to π/2 radians, even more preferably from the minimum phase difference equal to π/3 radians to the maximum phase difference equal to π/2 radians.

In one aspect, the step of calculating the phase difference comprises the steps of:
- identifying a first point of time for a maximum voltage value during a time period of the output voltage;
- identifying a second point of time for a maximum current value during the time period;
- calculating the phase difference based on the first point of time and the second point of time.

In one aspect, the step of calculating the phase difference comprises the steps of:
- identifying the first point of time for a zero voltage value during a period of the output voltage;
- identifying the second point of time for a zero current value during the period;
- calculating the phase difference based on the first point of time and the second point of time.

In one aspect, the method further comprises the steps of:
- controlling the amplitude of the output voltage of the AC power supply system based on the maximum current value.

In one aspect, the AC power supply system comprises an output transformer with a primary winding and a secondary winding, where a first terminal of the secondary winding is connected to the coalescer and where a second terminal is connected to a ground terminal, where the step of measuring the parameter representative of the output current of the power supply system comprises the step of:
- measuring the output current between the ground terminal and the second terminal of the secondary winding of the transformer.

In one aspect, the step of measuring the parameter representative of the output voltage of the AC power supply system comprises the steps of:
- measuring a voltage between a first terminal of the first winding of the transformer and a second terminal of the first winding.

In one aspect, a ground terminal of the electrodes of the coalescer is connected to the ground terminal.

In one aspect, the second terminal of the first winding is connected to the ground terminal of the electrodes.

The present invention also relates to an AC power supply system for supplying an AC output voltage to electrodes of an electrostatic coalescer, where the system comprises:
- a control system for controlling the output voltage and output current supplied from the power supply system to the electrostatic coalescer;
- a current sensor for measuring a parameter representative of the output current of the AC power supply system;
- a voltage sensor for measuring a parameter representative of the output voltage of the AC power supply system;
where the current sensor and the voltage sensor is connected to the control system; characterized in that the control system is configured to:
- identifying a phase difference between the output current and the output voltage based on information from the current and voltage sensors;
- controlling the AC power supply system to keep the phase difference in a predetermined range from a minimum phase difference equal to π/6 radians to a maximum phase difference equal to π/2 radians.

In one aspect, the AC power supply system comprises a controllable inductor and where the control system is configured to:
- controlling an inductance of the controllable inductor of the AC power supply system.

In one aspect, the control system is configured to:
- controlling the AC power supply system to keep the output current leading the output voltage.

In one aspect, the control system is configured to:
- keep the phase difference in the range from the minimum phase difference equal to π/4 radians to the maximum phase difference equal to π/2 radians, even more preferably from the minimum phase difference equal to π/3 radians to the maximum phase difference equal to π/2 radians.

In one aspect, the control system is configured to calculate the phase difference by:
- identifying a first point of time for a maximum voltage value during a time period of the output voltage;
- identifying a second point of time for a maximum current value during the time period;
- calculating the phase difference based on the first point of time and the second point of time.

In one aspect, the AC power supply system comprises an output transformer with a primary winding and a secondary winding, where a first terminal of the secondary winding is connected to the coalescer and where a second terminal is connected to a ground terminal, and where the current sensor is connected between the ground terminal and the second terminal of the secondary winding of the transformer.

In one aspect, the voltage sensor is connected between a first terminal of the first winding of the transformer and a second terminal of the first winding.

In one aspect, a ground terminal of the electrodes of the coalescer is connected to the ground terminal.

In one aspect, the second terminal of the first winding is connected to the ground terminal of the electrodes.

In one aspect, the control system of the power supply system comprises a PID regulator for controlling the phase difference.

In one aspect, the control system is configured to calculate a parameter representative of the water cut of the fluid in the coalescer based on the measured parameters and the calculated phase difference. This water can be important information for the operator.

In one aspect, the AC power supply system adjusts the applied output voltage to provide an optimal coalescence, in a dynamic closed loop where the phase difference φ is the control variable, where the phase difference is kept within the above predetermined range.

According to the invention above, it is provided an AC power supply system with a dynamic closed loop control with an optimum coalescence point which will improve the technical limitations and give better, safer and more reliable coalescence performance.

The mass percentage of water in crude oil is often referred to as "water cut". The water cut in crude oil from one oil well may vary from for example 5% to 10% over a relatively short period of time, typically minutes. It should be noted that the water cut is dependent of the fluid from the oil well. Hence, in periods with so-called water flooding, the water cut may increase up to 100%.

It should be noted that so-called water slugs, with up to 100% water cuts may occur from milliseconds and up to a few seconds. Temporary variations of ±5 - 10 % in the water cut may vary over minutes up to several hours. Long term changes of ±1 - 5 % in the water cut may vary over hours and days.

### DETAILED DESCRIPTION

Embodiments of the invention will now be described with reference to the enclosed drawings, where:
Fig. 1 illustrates the prior art power supply system discussed above;
Fig. 2 illustrates a first embodiment of the invention;
Fig. 3 illustrates voltage and current curves as a function of time in a low conductivity mode, where the time difference is indicated;
Fig. 4 illustrates the minimum and maximum time difference of fig. 4;
Fig. 5 illustrates voltage and current curves as a function of time in a high conductivity mode, where the time difference is indicated;
Fig. 6 shows the result of real measurements of voltage vs current in the power supply system, with a first phase difference;
Fig. 7 shows the result of real measurements of voltage vs current in the power supply system, with a second phase difference;
Fig. 8 describes a general embodiment of the invention, where the power supply is drawn as a dashed white box.

Fig. 1 is described in detail in the introduction above.

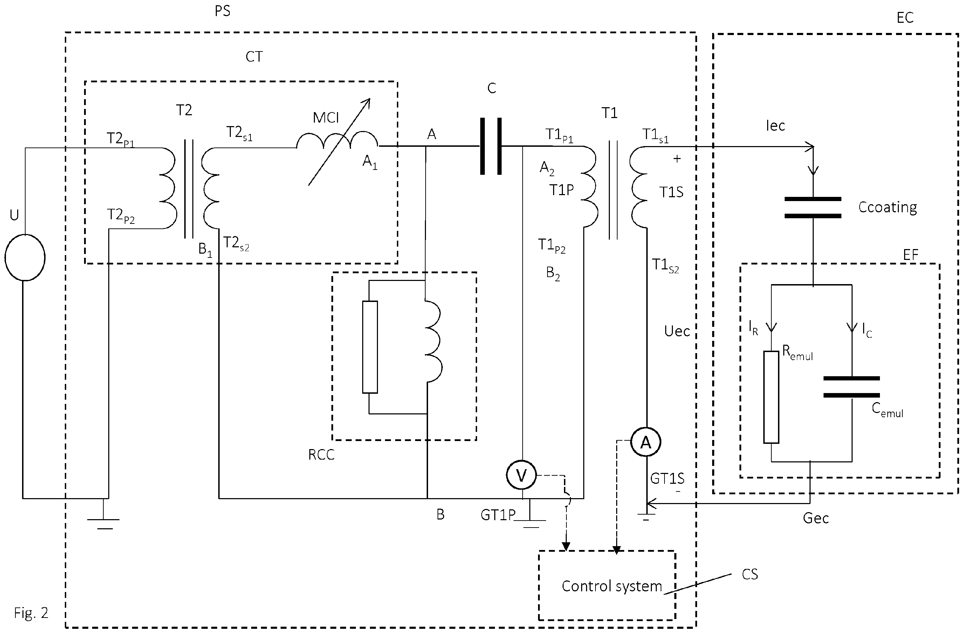

It is now referred to fig. 2. It should be noted that the power supply system PS, the coalescer EC and the magnetic controllable inductor MCI of the power supply system PS are considered known for a skilled person from NO 336293 and US 2005190585 and will not be described here in further detail. In fig. 2, the control system (dashed box) is connected to the magnetic controllable inductor MCI in order to control or regulate the inductance of this magnetic controllable inductor MCI.

In fig. 2, similar to fig. 1, it is shown that the power supply system PS comprises an output transformer T1 with a primary winding T1P and a secondary winding T1S, where a first terminal T1S1 of the secondary winding T1S is connected to the coalescer EC and where a second terminal T1S2 is connected to a ground terminal GT1S. Also the electrodes of the coalescer is connected to a ground terminal Gec. In fig. 2, it is shown that the ground terminals Gec, GT1S are connected directly to each other.

As described in the introduction above, the first winding TIP of the transformer T1 has a first terminal T1P1 and a second terminal T1P2.

The voltage supplied by the power supply system PS to the coalescer EC is indicated in fig. 2 and referred to hereinafter as an output voltage Uec, and the current drawn by the coalescer EC from the power supply system PS is indicated in fig. 2 and referred to hereinafter as the output current Iec.

In fig. 2, an amperemeter A for measuring a parameter representative of the output current Iec is connected in series between the ground terminal GT1S and the second terminal T2S2 of the secondary winding T1S of the transformer T1. In this example, the output current Iec is measured directly by means of the amperemeter A.

In fig. 2, a voltmeter V for measuring a parameter representative of measuring the output voltage Uec of the power supply system PS is connected between the first first terminal T1P1 and the second terminal T1P2 of the primary winding TIP of the transformer T1 The output voltage Uec is here measured indirectly, where the output voltage Uec is calculated by the voltmeter measurement and the known transformer ratio of the first transformer T1.

As shown with dashed lines, the voltmeter V and the amperemeter A are connected to the control system, where the control system is using the signals from the voltmeter and the amperemeter to control the power supply system PS. In fig. 2, the control signal is used to control the inductance of the magnetically controllable inductor MCI. It should be noted that the power supply system PS can control other parameters as well, such as the amplitude of the output voltage Uec.

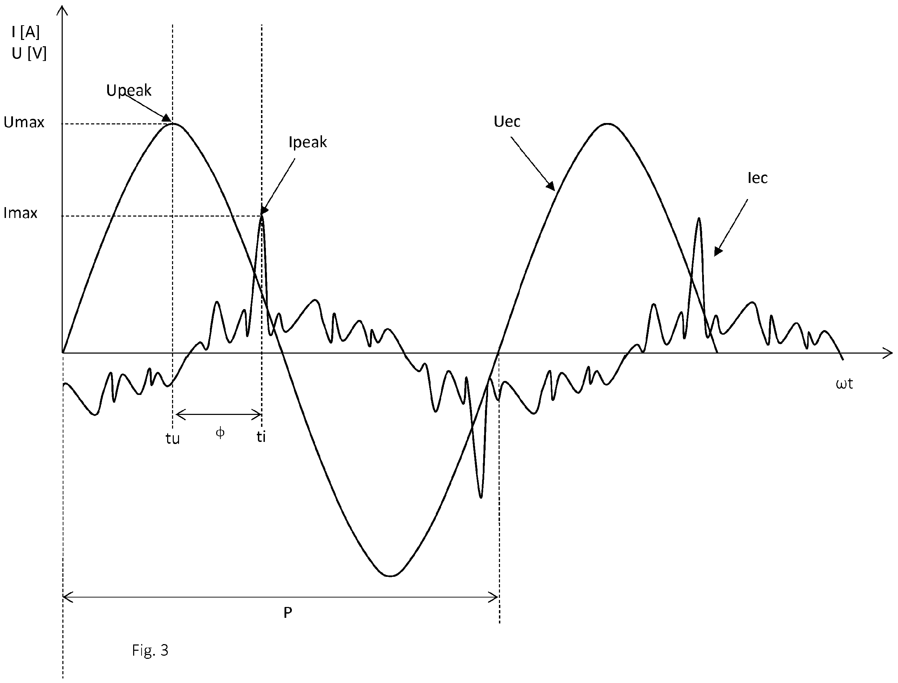

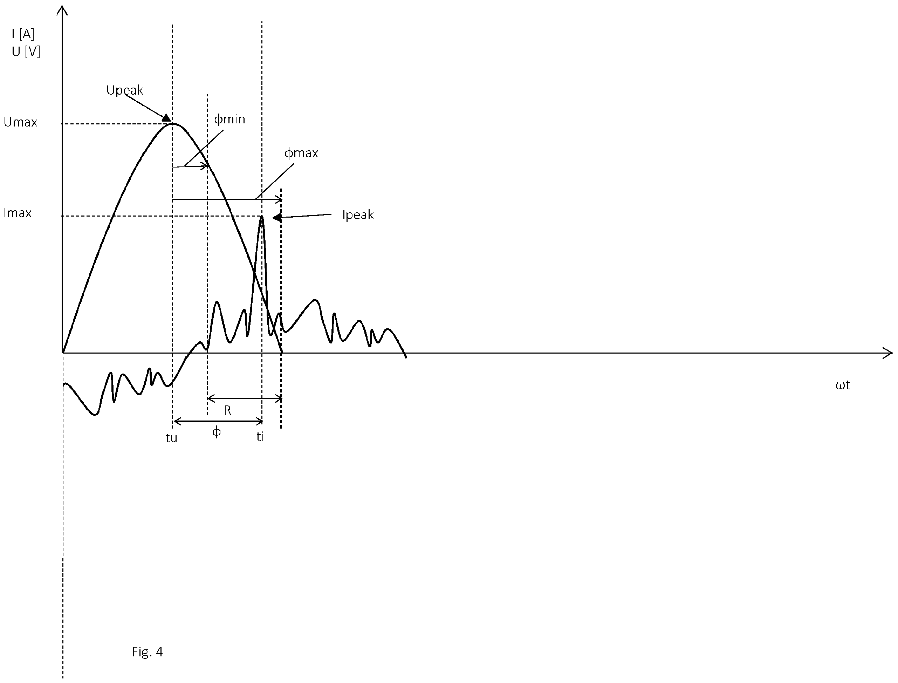

The method for controlling the power supply system PS will now be described with reference to fig. 3 and 4. Here, the horizontal axis is a time axis indicated and the vertical axis is a voltage and current axis.

Here, the output voltage Uec is shown as an ideal sine curve with a voltage period P, a voltage peak denoted as Upeak at a maximum voltage Umax within the positive half period. A corresponding negative peak is found in the negative half period. It should be noted that the shape of the curve for the output voltage Uec in many cases will not be an ideal sine curve, as it will have harmonic components as well. The point of time for the voltage peak Upeak is indicated as tu.

The output current Iec is shown as a time variable curve based on previously experienced currents drawn by coalescers. It should be observed that the output current Iec has several positive peaks within its positive half period and several negative peaks during its negative half period. In fig. 3, the highest peak is indicated as Ipeak at a maximum current Imax. The point of time for the current peak Ipeak is indicated as ti.

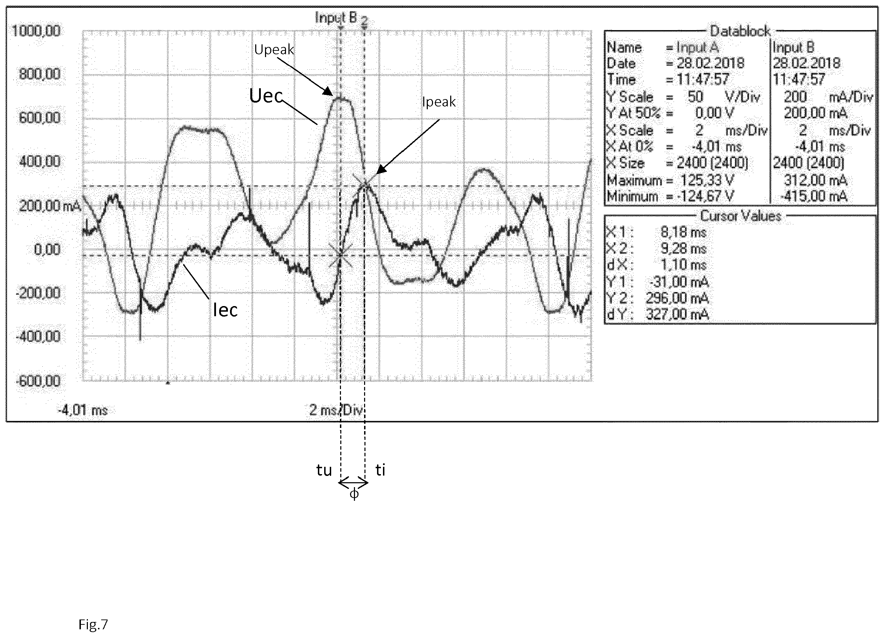

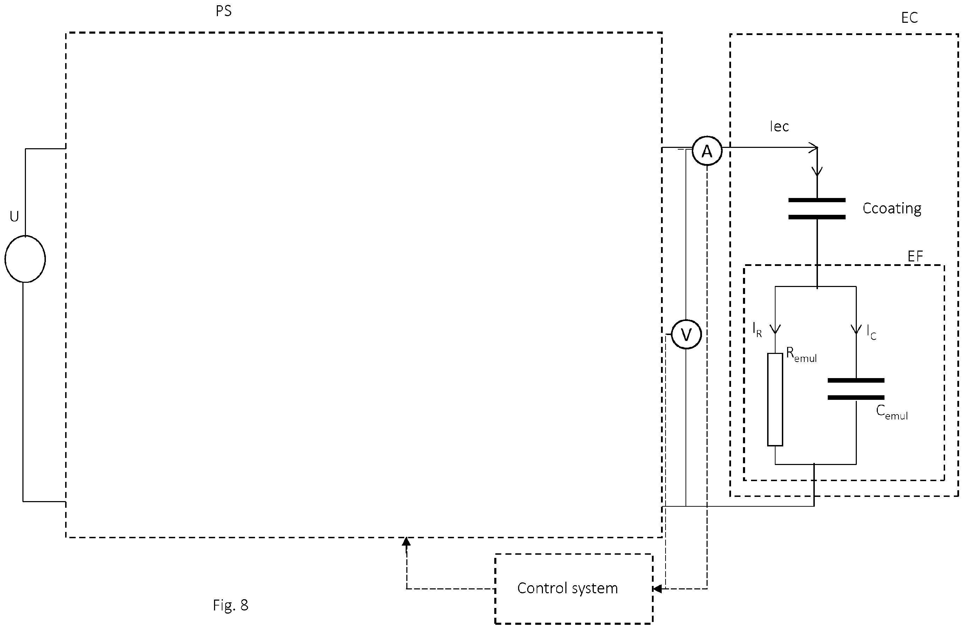

Curves based on real measurements of the voltages and currents are shown in fig. 7 and 8 and will be described further in detail below.

Due to the capacitive nature of the coalescer EC caused by the coating and the emulsion (Ccoating and Cemul in fig. 2), the output current Iec will be leading the output voltage Uec with a phase difference φ between the points of time tu, ti. As will be described further in detail below, the phase difference φ may also be measured based on negative peak values, when the voltage and current goes from positive to negative or vice versa.

As described above, the output voltage Uec is measured by means of the voltmeter V and the output current Ie is measured by means of the amperemeter A. Hence, in the present embodiment, the control system is receiving measurements of, or is calculating, the parameters Upeak, Umax, Ipeak, Imax, φ.

The current peak Ipeak can be found by analyzing the current measurements received from the amperemeter A during a period or positive half period, and then determine that the highest current value represents the current peak Ipeak.

In general, there are several terms used when describing the time relationship between an alternating current and an alternating voltage. When the AC current is in phase with the AC voltage, the phase difference φ is 0 (in radians) or 0°. It is also common to refer to this as the "power factor" or "cos φ" being 1. Typically, this time relationship is not measured in seconds, as this time relationship is frequency-dependent (typically, the frequency of a power supply system is 50 or 60 Hz). However, it should be noted that it is also possible to use time difference measured in seconds as a parameter representative of the phase difference φ shown in fig. 3 and 4.

In an ideal capacitive circuit, the AC current is leading the AC voltage with a phase difference φ of π/2 (in radians) or 90°. Here, the power factor or cos φ is 0. In a typical R-C-circuit, the power factor is often referred to as a leading power factor, which, by definition, is negative. However, in the present description, this negative notation is not used, as the phase difference φ is drawn as arrows from the voltage curve to the current curve in the drawing.

It is now referred to fig. 4, showing only one positive half period of the output voltage Uec.

Here, a minimum phase difference is indicated as an arrow φmin and a maximum phase difference is indicated as an arrow φmax. It is also indicated a range R for phase differences between the minimum phase difference φmin and the maximum phase difference φmax, i.e. the range R can be expressed as R = [φmin, φmax]. As shown, the phase difference φ is within the range R.

This range R is defined in the control system. The range R can be constant (i.e. independent of other parameters), or it can be dependent on predetermined factors (i.e. a first range is used under some conditions, and a second range is used under other conditions).

In combination performing the above method steps, a control system controls the power supply system PS to keep the phase difference φ within the predetermined range R.

In the present embodiment, this is done by controlling the inductance of the controllable inductor MCI of the power supply system PS.

In table 1 below, examples of ranges R is shown.

**Table 1: examples of different ranges of phase difference (φ)**

| **Range number** | **Minimum phase difference (φmin) [radians]** | **Maximum phase difference (φmax) [radians]** |
|---|---|---|
| 1 | π/6 | π/2 |
| 2 | π/4 | π/2 |
| 3 | π/3 | π/2 |

Hence, the widest first range R1 is [π/6, π/2], the more narrow second range R2 is [π/4, π/2], the even more narrow third range R3 is [π/3, π/2].

Range number 3 is one preferred embodiment, as the coalescence process is optimal when the phase difference φ is close to π/2. However, if it is not possible to control the phase difference to be in only within range number 3 or, if some predetermined operating conditions are present, then the control system can be controlling the phase difference φ to be in range number. 2. Again, if it is not possible to control the phase difference to be in only within range number 2, then the control system can be controlling the phase difference φ to be in range number 1. In a preferred embodiment, the power supply system is controlling the phase difference φ to be as close to the maximum phase difference φmax as possible. In such an embodiment, the phase difference φ is also considered to be within range number 3 above.

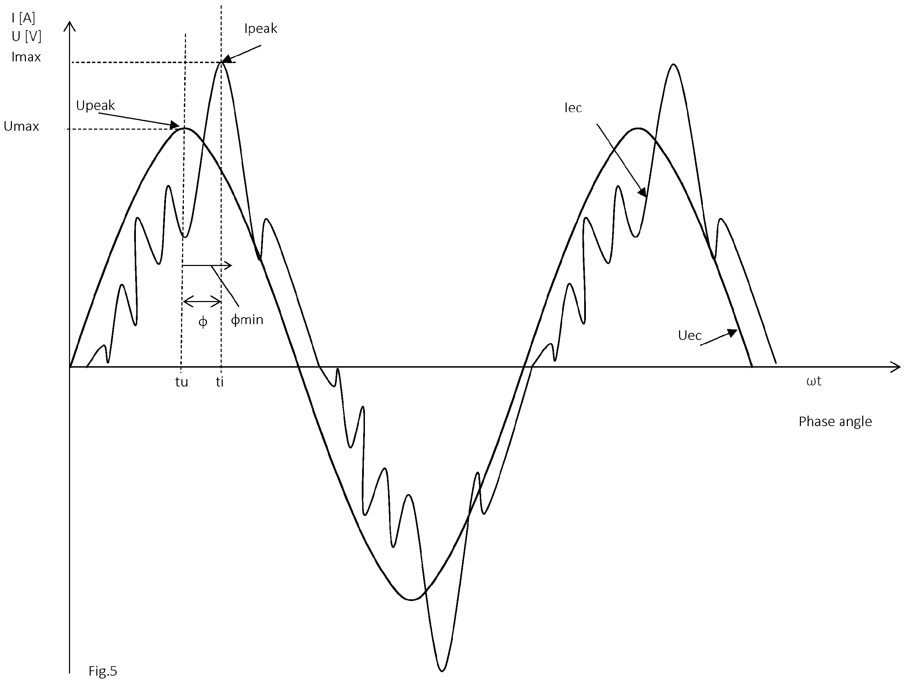

It is now referred to fig. 5. Here, the curve for the output voltage Uec is drawn as an ideal sine curve as in fig. 3. The phase difference φ between the voltage peak Upeak and the current peak Ipeak is also shown. It is apparent that the phase difference φ is smaller than the minimum phase difference φmin, which indicates that the electric equivalent of the coalescer EC is more resistive than the situation in fig. 3. Here, as a consequence, the maximum current Imax at the peak Ipeak is higher than the maximum current Imax of fig. 3. It should be noted that the situation in fig. 5 is an undesired situation, which can be avoided by the method of the present invention. By controlling the inductance of the magnetic controllable inductor MCI, the phase difference φ can be controlled to be within the predetermined range again, as described above with reference to fig. 3 and 4.

It should be noted that the first indication of an increased risk for a short circuit between the electrodes of the coalescer in the present method is a decrease in phase difference φ. A second indication of an increased risk for a short circuit is a measured increase in the maximum current value Imax itself. By identifying a decrease in phase difference φ as a first indication, a substantial current increase can be avoided.

However, it should be noted that if a substantial increase in the maximum current value Imax is detected, the power supply system can be controlled to lower the output voltage Umax, i.e. to set a lower maximum voltage amplitude Umax.

It is now referred to fig. 7. Here, it is shown that the amplitude of the output voltage Uec is also changed according to a change in water cut.

### Example

In a first example, the water cut is variating around ca 6%. The phase difference φ is controlled to be close to φmax.

Then, in a situation where the water cut increases to for example 15%, the phase angle will decrease as the load seen from the power supply system becomes more resistive. Hence, the current will increase as the fluid now becomes more resistive than capacitive. As a result, the coalescence in the coalescer EC will be reduced as the water will build water bridges and the current will tend to follow those water bridges.

Hence, it is desired that the voltage amplitude is reduced and at the same time the change in phase difference will be compensated for by changing the inductance of the magnetic controllable inductor MCI. Hence, the control system is controlling the phase difference φ to be close to φmax again.

Hence, at this lower voltage amplitude and desired capacitive phase difference the coalescence is at an optimal level which is maintained as long as the water cut is around 15%.

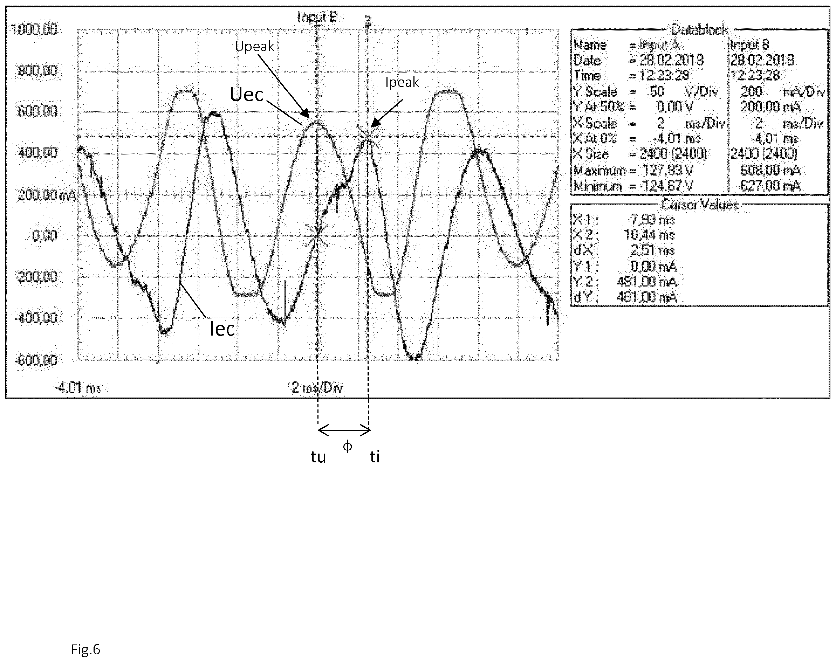

It is now referred to fig. 6 and 7, representing real measurements of the output voltage Uec and output current Iec of a power supply system PS as shown in fig. 2 for two different operating conditions. As seen in these drawings, the voltage Uec is not an ideal sine curve. However, it is possible to detect the peaks Upeak and Ipeak for the voltage and current respectively. In fig. 6, the time tu and ti is indicated as 2,51 ms and in fig. 7, the time between ti and tu is indicated as 1,10 ms.

### Alternative embodiments

It is now referred to fig. 8. Here, the power supply system PS is indicated as a white dashed box. In this embodiment, the power supply system PS may comprise a thyristor, or a frequency converter, or a power electronics with semiconductor-based switches etc. Here, the above method step of controlling the power supply system PS to keep the phase difference within the range R comprises the step of controlling the thyristor, or the frequency converter, or the power electronic components.

In one alternative embodiment, the phase difference φ is calculated based on the points of time where the sign of the voltage Uec and current Iec changes. Hence, in a first step, the first point of time tu for a zero voltage value Uzero during a period P of the output voltage Uec is detected and a second point of time ti for a zero current value Izero during the period P is detected. Then, the phase difference φ is calculated based on the first point of time tu and the second point of time ti. In most cases, the phase difference φ calculated from the zero values Uzero, Izero will be equal to or substantially equal to the phase difference φ calculated from the peak values Upeak, Ipeak. However, detecting the zero crossing may be more difficult than detecting the peaks. In some cases, there might be several zero crossings during a period - and in such a case it may be difficult to calculate the phase difference correctly with this alternative method.

According to the description above, it is provided a power supply system with a dynamic closed loop control with an optimum coalescence point will improve the technical limitations and give better, safer and more reliable coalescence performance.

In yet another embodiment of the invention, the control the power supply system PS adjusts the applied output voltage (as high as practical feasible) to provide an optimal coalescence, in a dynamic closed loop where the phase difference φ is the control variable, where the phase difference φ is kept within a predetermined range R between π/6 radians and π/2 radians.

In yet another embodiment of the invention, the control the power supply system PS adjusts the applied output voltage (as high as practical feasible) to provide an optimal coalescence, in a dynamic closed loop where the phase difference φ is the control variable, where the phase difference φ is kept within a predetermined range R between π/6 radians and π/2 radians and as close as possible to π/2.

## Claims

1. Method of controlling an AC power supply system (PS) supplying an AC output voltage (Uec) to electrodes of an electrostatic coalescer (EC), the method comprising the steps of:
- measuring a parameter representative of an output current (Iec) of the power supply system (PS); and
- measuring a parameter representative of the output voltage (Uec) of the power supply system (PS);
**characterised in that** the method further comprises the steps of:
- identifying a phase difference (φ) between the output current (Iec) and the output voltage (Uec);
- controlling the AC power supply system (PS) to keep the phase difference (φ) in a predetermined range (R) from a minimum phase difference (φmin) equal to π/6 radians to a maximum phase difference (φmax) equal to π/2 radians.

2. Method according to claim 1, where the step of controlling the AC power supply system (PS) comprises the step of:
- controlling an inductance of a controllable inductor (MCI) of the AC power supply system (PS).

3. Method according to claim 1 or 2, where the step of controlling the AC power supply system (PS) comprises the steps of:
- controlling the AC power supply system (PS) to keep the output current (Iec) leading the output voltage (Uec).

4. Method according to claim 3, where the step of controlling the AC power supply system (PS) comprises controlling the AC power supply system (PS) to keep the phase difference (φ) in the range (R) from the minimum phase difference (φmin) equal to π/4 radians to the maximum phase difference (φmax) equal to π/2 radians, even more preferred from the minimum phase difference (φmin) equal to π/3 radians to the maximum phase difference (φmax) equal to π/2 radians.

5. Method according to any one of the above claims, where the step of calculating the phase difference (φ) comprises the steps of:
- identifying a first point of time (tu) for a maximum voltage value (Umax) during a time period (P) of the output voltage (Uec);
- identifying a second point of time (ti) for a maximum current value (Imax) during the time period (P);
- calculating the phase difference (φ) based on the first point of time (tu) and the second point of time (ti).

6. Method according to any one of the above claims 1 - 4, the step of calculating the phase difference (φ) comprises the steps of:
- identifying the first point of time (tu) for a zero voltage value (Uzero) during a period (P) of the output voltage (Uec);
- identifying the second point of time (ti) for a zero current value (Izero) during the period (P);
- calculating the phase difference (φ) based on the first point of time (tu) and the second point of time (ti).

7. Method according to claim 5, where the method further comprises the steps of:
- controlling the amplitude of the output voltage (Uec) of the AC power supply system (PS) based on the maximum current value (Imax).

8. Method according to any one of the above claims, where the AC power supply system (PS) comprises an output transformer (T1) with a primary winding (TIP) and a secondary winding (T1S), where a first terminal (T1S1) of the secondary winding (T1S) is connected to the coalescer (EC) and where a second terminal (T1S2) is connected to a ground terminal (GT1S), where the step of measuring the parameter representative of the output current (Iec) of the AC power supply system (PS) comprises the step of:
- measuring the output current (Iec) between the ground terminal (GT1S) and the second terminal (T2S2) of the secondary winding (T1S) of the transformer (T1).

9. Method according to claim 8, where the step of measuring the parameter representative of the output voltage (Uec) of the AC power supply system (PS) comprises the steps of:
- measuring a voltage between a first terminal (T1P1) of the first winding (TIP) of the transformer (T1) and a second terminal (T1P2) of the first winding (TIP).

10. Method according to claim 8, where a ground terminal (Gec) of the electrodes of the coalescer (EC) is connected to the ground terminal (GT1S).

11. Method according to claim 8, where the second terminal (T1P2) of the first winding (TIP) is connected to the ground terminal (Gec) of the electrodes (EC).

12. Method according to claim 1, where the method further comprises the step of:
- calculating a parameter representative of the water cut of the fluid in the coalescer based on the measured parameters and the calculated phase difference.

13. AC power supply system (PS) for supplying an AC output voltage (Uec) to electrodes of an electrostatic coalescer (EC), where the AC power supply system (PS) comprises:
- a control system (CS) for controlling the output voltage (Uec) and output current (Iec) supplied from the AC power supply system (PS) to the electrostatic coalescer (EC);
- a current sensor (I) for measuring a parameter representative of the output current (Iec) of the AC power supply system (PS);
- a voltage sensor (V) for measuring a parameter representative of the output voltage (Uec) of the AC power supply system (PS);
where the current sensor and the voltage sensor is connected to the control system (CS);
**characterized in that** the control system (CS) is configured to:
- identifying a phase difference (φ) between the output current (Iec) and the output voltage (Uec) based on information from the current and voltage sensors (I, V);
- controlling the AC power supply system (PS) to keep the phase difference (φ) in a predetermined range (R) from a minimum phase difference (φmin) equal to π/6 radians to a maximum phase difference (φmax) equal to π/2 radians.

14. AC power supply system according to claim 13, where the power supply system (PS) comprises a controllable inductor (MCI) and where the control system (CS) is configured to:
- controlling an inductance of the controllable inductor (MCI) of the power supply system (PS).

15. AC power supply system according to claim 13 or 14, where the control system (CS) is configured to:
- controlling the AC power supply system (PS) to keep the output current (Iec) leading the output voltage (Uec).

16. AC power supply system according to any one of claims 14 - 15, where the control system (CS) is configured to:
- keep the phase difference (φ) in the range (R) from the minimum phase difference (φmin) equal to π/4 radians to the maximum phase difference (φmax) equal to π/2 radians, even more preferred from the minimum phase difference (φmin) equal to π/3 radians to the maximum phase difference (φmax) equal to π/2 radians.

17. AC power supply system according to any one of claims 13 - 16, where the control system (CS) is configured to calculate the phase difference (φ) by:
- identifying a first point of time (tu) for a maximum voltage value (Umax) during a time period (P) of the output voltage (Uec);
- identifying a second point of time (ti) for a maximum current value (Imax) during the time period (P);
- calculating the phase difference (φ) based on the first point of time (tu) and the second point of time (ti).

18. AC power supply system according to any one of claims 13 - 17, where the power supply system (PS) comprises an output transformer (T1) with a primary winding (TIP) and a secondary winding (T1S), where a first terminal (T1S1) of the secondary winding (T1S) is connected to the coalescer (EC) and where a second terminal (T1S2) is connected to a ground terminal (GT1S), and where the current sensor (I) is connected between the ground terminal (GT1S) and the second terminal (T2S2) of the secondary winding (T1S) of the transformer (T1).

19. AC power supply system according to claim 18, where the voltage sensor (V) is connected between a first terminal (T1P1) of the first winding (TIP) of the transformer (T1) and a second terminal (T1P2) of the first winding (TIP).

20. AC power supply system according to claim 18 or 19, where a ground terminal (Gec) of the electrodes of the coalescer (EC) is connected to the ground terminal (GT1S).

21. AC power supply system according to claim 19, where the second terminal (T1P2) of the first winding (TIP) is connected to the ground terminal (Gec) of the electrodes (EC).

22. AC power supply system according to claim 13, where the control system is configured to calculate a parameter representative of the water cut of the fluid in the coalescer based on the measured parameters and the calculated phase difference.

## Patentansprüche

1. Verfahren zum Steuern eines AC-Stromversorgungssystems (PS), das Elektroden eines elektrostatischen Koaleszers (EC) eine AC-Ausgangsspannung (Uec) zuführt, wobei das Verfahren die folgenden Schritte umfasst:
- Messen eines Parameters, der für einen Ausgangsstrom (Iec) des Stromversorgungssystems (PS) repräsentativ ist; und
- Messen eines Parameters, der für die Ausgangsspannung (Uec) des Stromversorgungssystems (PS) repräsentativ ist;
**dadurch gekennzeichnet, dass** das Verfahren ferner die folgenden Schritte umfasst:
- Identifizieren einer Phasendifferenz(φ) zwischen dem Ausgangsstrom (Iec) und der Ausgangsspannung (Uec);
- Steuern des AC-Stromversorgungssystems (PS), um die Phasendifferenz(φ) in einem vorgegebenen Bereich (R) von einer minimalen Phasendifferenz (φmin), die π/6 Radiant entspricht, zu einer maximalen Phasendifferenz (φmax) zu halten, die π/2 Radiant entspricht.

2. Verfahren nach Anspruch 1, wobei der Schritt des Steuerns des AC-Stromversorgungssystems (PS) den folgenden Schritt umfasst:
- Steuern einer Induktivität eines steuerbaren Induktors (MCI) des AC-Stromversorgungssystems (PS).

3. Verfahren nach Anspruch 1 oder 2, wobei der Schritt des Steuerns des AC-Stromversorgungssystems (PS) den folgenden Schritt umfasst:
- Steuern des AC-Stromversorgungssystems (PS), um den Ausgangsstrom (Iec) zu halten, welcher in Bezug auf die Ausgangsspannung (Uec) voreilt.

4. Verfahren nach Anspruch 3, wobei der Schritt des Steuerns des AC-Stromversorgungssystems (PS) das Steuern des AC-Stromversorgungssystems (PS) umfasst, um die Phasendifferenz(φ) in dem Bereich (R) von der minimalen Phasendifferenz (φmin), die π/4 Radiant entspricht, zu der maximalen Phasendifferenz (φmax) zu halten, die π/2 Radiant entspricht, sogar noch stärker bevorzugt von der minimalen Phasendifferenz (φmin) die π/3 Radiant entspricht, zu der maximalen Phasendifferenz (φmax), die π/2 Radiant entspricht.

5. Verfahren nach einem der vorstehenden Ansprüche, wobei der Schritt des Berechnens der Phasendifferenz (φ) die folgenden Schritte umfasst:
- Identifizieren eines ersten Zeitpunkts (tu) für einen maximalen Spannungswert (Umax) während eines Zeitraums (P) der Ausgangsspannung (Uec);
- Identifizieren eines zweiten Zeitpunkts (ti) für einen maximalen Stromwert (Imax) während des Zeitraums (P);
- Berechnen der Phasendifferenz (φ) auf Grundlage des ersten Zeitpunkts (tu) und des zweiten Zeitpunkts (ti).

6. Verfahren nach einem der vorstehenden Ansprüche 1-4, wobei der Schritt des Berechnens der Phasendifferenz (φ) die folgenden Schritte umfasst:
- Identifizieren des ersten Zeitpunkts (tu) für einen Nullspannungswert (Unull) während eines Zeitraums (P) der Ausgangsspannung (Uec);
- Identifizieren des zweiten Zeitpunkts (ti) für einen Nullstromwert (Inull) während des Zeitraums (P);
- Berechnen der Phasendifferenz (φ) auf Grundlage des ersten Zeitpunkts (tu) und des zweiten Zeitpunkts (ti).

7. Verfahren nach Anspruch 5, wobei das Verfahren ferner die folgenden Schritte umfasst:
- Steuern der Amplitude der Ausgangsspannung (Uec) des AC-Stromversorgungssystems (PS) auf Grundlage des maximalen Stromwerts (Imax).

8. Verfahren nach einem der vorstehenden Ansprüche, wobei das AC-Stromversorgungssystem (PS) einen Ausgangstransformator (T1) mit einer Primärwicklung (TIP) und einer Sekundärwicklung (T1S) umfasst, wobei ein erster Anschluss (T1S1) der Sekundärwicklung (T1S) mit dem Koaleszer (EC) verbunden ist und wobei ein zweiter Anschluss (T1S2) mit einem Erdungsanschluss (GT1S) verbunden ist, wobei der Schritt des Messens des Parameters, der für den Ausgangsstrom (Iec) des AC-Stromversorgungssystems (PS) repräsentativ ist, den folgenden Schritt umfasst:
- Messen des Ausgangsstroms (Iec) zwischen dem Erdungsanschluss (GT1S) und dem zweiten Anschluss (T2S2) der Sekundärwicklung (T1S) des Transformators (T1).

9. Verfahren nach Anspruch 8, wobei der Schritt des Messens des Parameters, der für die Ausgangsspannung (Uec) des AC-Stromversorgungssystems (PS) repräsentativ ist, die folgenden Schritte umfasst:
- Messen einer Spannung zwischen einem ersten Anschluss (T1P1) der ersten Wicklung (TIP) des Transformators (T1) und einem zweiten Anschluss (T1P2) der ersten Wicklung (T1P).

10. Verfahren nach Anspruch 8, wobei ein Erdungsanschluss (Gec) der Elektroden des Koaleszers (EC) mit dem Erdungsanschluss (GT1S) verbunden ist.

11. Verfahren nach Anspruch 8, wobei der zweite Anschluss (T1P2) der ersten Wicklung (TIP) mit dem Erdungsanschluss (Gec) der Elektroden (EC) verbunden ist.

12. Verfahren nach Anspruch 1, wobei das Verfahren ferner den folgenden Schritt umfasst:
- Berechnen eines Parameters, der für den Wassergehalt des Fluids in dem Koaleszer repräsentativ ist, auf Grundlage der gemessenen Parameter und der berechneten Phasendifferenz.

13. AC-Stromversorgungssystem (PS), um Elektroden eines elektrostatischen Koaleszers (EC) eine AC-Ausgangsspannung (Uec) zuzuführen, wobei das AC-Stromversorgungssystem (PS) Folgendes umfasst:
- ein Steuersystem (CS) zum Steuern der Ausgangsspannung (Uec) und des Ausgangsstroms (Iec), die dem elektrostatischen Koaleszer (EC) von dem AC-Stromversorgungssystem (PS) zugeführt werden;
- einen Stromsensor (I) zum Messen eines Parameters, der für den Ausgangsstrom (Iec) des AC-Stromversorgungssystems (PS) repräsentativ ist;
- einen Spannungssensor (V) zum Messen eines Parameters, der für die Ausgangsspannung (Uec) des AC-Stromversorgungssystems (PS) repräsentativ ist;
wobei der Stromsensor und der Spannungssensor mit dem Steuersystem (CS) verbunden sind; **dadurch gekennzeichnet, dass** das Steuersystem (CS) zu Folgendem konfiguriert ist:
- Identifizieren einer Phasendifferenz (φ) zwischen dem Ausgangsstrom (Iec) und der Ausgangsspannung (Uec) auf Grundlage von Informationen von dem Strom- und Spannungssensor (I, V);
- Steuern des AC-Stromversorgungssystems (PS), um die Phasendifferenz (φ) in einem vorgegebenen Bereich (R) von einer minimalen Phasendifferenz (φmin), die π/6 Radiant entspricht, zu einer maximalen Phasendifferenz (φmax) zu halten, die π/2 Radiant entspricht.

14. AC-Stromversorgungssystem nach Anspruch 13, wobei das Stromversorgungssystem (PS) einen steuerbaren Induktor (MCI) umfasst und wobei das Steuersystem (CS) zu Folgendem konfiguriert ist:
- Steuern einer Induktivität des steuerbaren Induktors (MCI) des Stromversorgungssystems (PS).

15. AC-Stromversorgungssystem nach Anspruch 13 oder 14, wobei das Steuersystem (CS) zu Folgendem konfiguriert ist:
- Steuern des AC-Stromversorgungssystems (PS), um den Ausgangsstrom (Iec) zu halten, welcher in Bezug auf die Ausgangsspannung (Uec) voreilt.

16. AC-Stromversorgungssystem nach einem der Ansprüche 14-15, wobei das Steuersystem (CS) zu Folgendem konfiguriert ist:
- Halten der Phasendifferenz (φ) in dem Bereich (R) von der minimalen Phasendifferenz (φmin), die π/4 Radiant entspricht, zu der maximalen Phasendifferenz (φmax), die π/2 Radiant entspricht, sogar noch stärker bevorzugt von der minimalen Phasendifferenz (φmin), die π/3 Radiant entspricht, zu der maximalen Phasendifferenz (φmax), die π/2 Radiant entspricht.

17. AC-Stromversorgungssystem nach einem der Ansprüche 13-16, wobei das Steuersystem (CS) konfiguriert ist, um die Phasendifferenz (φ) durch Folgendes zu berechnen:
- Identifizieren eines ersten Zeitpunkts (tu) für einen maximalen Spannungswert (Umax) während eines Zeitraums (P) der Ausgangsspannung (Uec);
- Identifizieren eines zweiten Zeitpunkts (ti) für einen maximalen Stromwert (Imax) während des Zeitraums (P);
- Berechnen der Phasendifferenz (φ) auf Grundlage des ersten Zeitpunkts (tu) und des zweiten Zeitpunkts (ti).

18. AC-Stromversorgungssystem nach einem der Ansprüche 13-17, wobei das Stromversorgungssystem (PS) einen Ausgangstransformator (T1) mit einer Primärwicklung (TIP) und einer Sekundärwicklung (T1S) umfasst, wobei ein erster Anschluss (T1S1) der Sekundärwicklung (T1S) mit dem Koaleszer (EC) verbunden ist und wobei ein zweiter Anschluss (T1S2) mit einem Erdungsanschluss (GT1S) verbunden ist, und wobei der Stromsensor (I) zwischen dem Erdungsanschluss (GT1S) und dem zweiten Anschluss (T2S2) der Sekundärwicklung (T1S) des Transformators (T1) verbunden ist.

19. AC-Stromversorgungssystem nach Anspruch 18, wobei der Spannungssensor (V) zwischen einem ersten Anschluss (T1P1) der ersten Wicklung (TIP) des Transformators (T1) und einem zweiten Anschluss (T1P2) der ersten Wicklung (TIP) verbunden ist.

20. AC-Stromversorgungssystem nach Anspruch 18 oder 19, wobei ein Erdungsanschluss (Gec) der Elektroden des Koaleszers (EC) mit dem Erdungsanschluss (GT1S) verbunden ist.

21. AC-Stromversorgungssystem nach Anspruch 19, wobei der zweite Anschluss (T1P2) der ersten Wicklung (TIP) mit dem Erdungsanschluss (Gec) der Elektroden (EC) verbunden ist.

22. AC-Stromversorgungssystem nach Anspruch 13, wobei das Steuersystem konfiguriert ist, um einen Parameter, der für den Wassergehalt des Fluids in dem Koaleszer repräsentativ ist, auf Grundlage der gemessenen Parameter und der berechneten Phasendifferenz zu berechnen.

## Revendications

1. Procédé de commande d'un système d'alimentation CA (PS) fournissant une tension de sortie CA (Uec) à des électrodes d'un coalesceur électrostatique (EC), le procédé comprenant les étapes de :
- mesure d'un paramètre représentatif d'un courant de sortie (lec) du système d'alimentation (PS) ; et
- mesure d'un paramètre représentatif de la tension de sortie (Uec) du système d'alimentation (PS) ;
**caractérisé en ce que** le procédé comprend en outre les étapes de :
- identification d'une différence de phase (φ) entre le courant de sortie (lec) et la tension de sortie (Uec) ;
- commande du système d'alimentation CA (PS) pour maintenir la différence de phase (φ) dans une plage (R) prédéterminée d'une différence de phase minimale (φmin) égale à π/6 radians à une différence de phase maximale (φmax) égale à π/2 radians.

2. Procédé selon la revendication 1, dans lequel l'étape de commande du système d'alimentation CA (PS) comprend l'étape de :
- commande d'une inductance d'un inducteur commandable (MCI) du système d'alimentation CA (PS).

3. Procédé selon la revendication 1 ou 2, dans lequel l'étape de commande du système d'alimentation CA (PS) comprend l'étape de :
- commande du système d'alimentation CA (PS) pour maintenir le courant de sortie (lec) acheminant la tension de sortie (Uec).

4. Procédé selon la revendication 3, dans lequel l'étape de commande du système d'alimentation CA (PS) comprend la commande du système d'alimentation CA (PS) pour maintenir la différence de phase (φ) dans la plage (R) de la différence de phase minimale (φmin) égale à π/4 radians à la différence de phase maximale (φmax) égale à π/2 radians, de manière encore plus préférée de la différence de phase minimale (φmin) égale à π/3 radians à la différence de phase maximale (φmax) égale à π/2 radians.

5. Procédé selon l'une quelconque des revendications ci-dessus, dans lequel l'étape de calcul de la différence de phase (φ) comprend les étapes de :
- identification d'un premier point dans le temps (tu) pour une valeur de tension maximale (Umax) pendant une période de temps (P) de la tension de sortie (Uec) ;
- identification d'un deuxième point dans le temps (ti) pour une valeur de courant maximale (Imax) pendant la période de temps (P) ;
- calcul de la différence de phase (φ) sur la base du premier point dans le temps (tu) et du deuxième point dans le temps (ti).

6. Procédé selon l'une quelconque des revendications 1 à 4 ci-dessus, l'étape de calcul de la différence de phase (φ) comprend les étapes de :
- identification du premier point dans le temps (tu) pour une valeur de tension nulle (Uzéro) pendant une période (P) de la tension de sortie (Uec) ;
- identification du deuxième point dans le temps (ti) pour une valeur de courant nulle (Izéro) pendant la période (P) ;
- calcul de la différence de phase (φ) sur la base du premier point dans le temps (tu) et du deuxième point dans le temps (ti).

7. Procédé selon la revendication 5, le procédé comprenant en outre l'étape de :
- commande de l'amplitude de la tension de sortie (Uec) du système d'alimentation CA (PS) sur la base de la valeur de courant maximale (Imax).

8. Procédé selon l'une quelconque des revendications ci-dessus, dans lequel le système d'alimentation CA (PS) comprend un transformateur de sortie (T1) avec un enroulement primaire (T1P) et un enroulement secondaire (T1S), dans lequel une première borne (T1S1) de l'enroulement secondaire (T1S) est connectée au coalesceur (EC) et dans lequel une deuxième borne (T1S2) est connectée à une borne de masse (GT1S), dans lequel l'étape de mesure du paramètre représentatif du courant de sortie (lec) du système d'alimentation CA (PS) comprend l'étape de :
- mesure du courant de sortie (lec) entre la borne de masse (GT1S) et la deuxième borne (T2S2) de l'enroulement secondaire (T1S) du transformateur (T1).

9. Procédé selon la revendication 8, dans lequel l'étape de mesurer du paramètre représentatif de la tension de sortie (Uec) du système d'alimentation CA (PS) comprend l'étape de :
- mesure d'une tension entre une première borne (T1P1) du premier enroulement (T1P) du transformateur (T1) et une deuxième borne (T1P2) du premier enroulement (T1P).

10. Procédé selon la revendication 8, dans lequel une borne de masse (Gec) des électrodes du coalesceur (EC) est connectée à la borne de masse (GT1S).

11. Procédé selon la revendication 8, dans lequel la deuxième borne (T1P2) du premier enroulement (T1P) est connectée à la borne de masse (Gec) des électrodes (EC).

12. Procédé selon la revendication 1, le procédé comprenant en outre l'étape de :
- calcul d'un paramètre représentatif de la proportion d'eau du fluide dans le coalesceur sur la base des paramètres mesurés et de la différence de phase calculée.

13. Système d'alimentation CA (PS) destiné à fournir une tension de sortie CA (Uec) à des électrodes d'un coalesceur électrostatique (EC), le système d'alimentation CA (PS) comprenant :
- un système de commande (CS) destiné à commander la tension de sortie (Uec) et le courant de sortie (lec) fournis du système d'alimentation CA (PS) au coalesceur électrostatique (EC) ;
- un capteur de courant (I) destiné à mesurer un paramètre représentatif du courant de sortie (lec) du système d'alimentation CA (PS) ;
- un capteur de tension (V) destiné à mesurer un paramètre représentatif de la tension de sortie (Uec) du système d'alimentation CA (PS) ;
dans lequel le capteur de courant et le capteur de tension sont connectés au système de commande (CS) ;
**caractérisé en ce que** le système de commande (CS) est configuré pour :
- identifier une différence de phase (φ) entre le courant de sortie (lec) et la tension de sortie (Uec) sur la base d'informations provenant des capteurs de courant et de tension (I, V) ;
- commander le système d'alimentation CA (PS) pour maintenir la différence de phase (φ) dans une plage (R) prédéterminée d'une différence de phase minimale (φmin) égale à π/6 radians à une différence de phase maximale (φmax) égale à π/2 radians.

14. Système d'alimentation CA selon la revendication 13, le système d'alimentation (PS) comprenant un inducteur commandable (MCI) et dans lequel le système de commande (CS) est configuré pour :
- commander une inductance de l'inducteur commandable (MCI) du système d'alimentation (PS).

15. Système d'alimentation CA selon la revendication 13 ou 14, dans lequel le système de commande (CS) est configuré pour :
- commander le système d'alimentation CA (PS) pour maintenir le courant de sortie (lec) acheminant la tension de sortie (Uec).

16. Système d'alimentation CA selon l'une quelconque des revendications 14 et 15, dans lequel le système de commande (CS) est configuré pour :
- maintenir la différence de phase (φ) dans la plage (R) de la différence de phase minimale (φmin) égale à π/4 radians à la différence de phase maximale (φmax) égale à π/2 radians, de manière encore plus préférée de la différence de phase minimale (φmin) égale à π/3 radians à la différence de phase maximale (φmax) égale à π/2 radians.

17. Système d'alimentation CA selon l'une quelconque des revendications 13 à 16, dans lequel le système de commande (CS) est configuré pour calculer la différence de phase (φ) par :
- identification d'un premier point dans le temps (tu) pour une valeur de tension maximale (Umax) pendant une période de temps (P) de la tension de sortie (Uec) ;
- identification d'un deuxième point dans le temps (ti) pour une valeur de courant maximale (Imax) pendant la période de temps (P) ;
- calcul de la différence de phase (φ) sur la base du premier point dans le temps (tu) et du deuxième point dans le temps (ti).

18. Système d'alimentation CA selon l'une quelconque des revendications 13 à 17, le système d'alimentation (PS) comprenant un transformateur de sortie (T1) avec un enroulement primaire (T1P) et un enroulement secondaire (T1S), dans lequel une première borne (T1S1) de l'enroulement secondaire (T1S) est connectée au coalesceur (EC) et dans lequel une deuxième borne (T1S2) est connectée à une borne de masse (GT1S), et dans lequel le capteur de courant (I) est connecté entre la borne de masse (GT1S) et la deuxième borne (T2S2) de l'enroulement secondaire (T1S) du transformateur (T1).

19. Système d'alimentation CA selon la revendication 18, dans lequel le capteur de tension (V) est connecté entre une première borne (T1P1) du premier enroulement (T1P) du transformateur (T1) et une deuxième borne (T1P2) du premier enroulement (T1P).

20. Système d'alimentation CA selon la revendication 18 ou 19, dans lequel une borne de masse (Gec) des électrodes du coalesceur (EC) est connectée à la borne de masse (GT1S).

21. Système d'alimentation CA selon la revendication 19, dans lequel la deuxième borne (T1P2) du premier enroulement (T1P) est connectée à la borne de masse (Gec) des électrodes (EC).

22. Système d'alimentation CA selon la revendication 13, dans lequel le système de commande est configuré pour calculer un paramètre représentatif de la proportion d'eau du fluide dans le coalesceur sur la base des paramètres mesurés et de la différence de phase calculée.
